(19) Europäisches Patentamt / European Patent Office / Office européen des brevets

(11) **EP 2 501 518 B1**

(12) **FASCICULE DE BREVET EUROPEEN**

(45) Date de publication et mention
de la délivrance du brevet:
**23.10.2013 Bulletin 2013/43**

(21) Numéro de dépôt: **10824259.5**

(22) Date de dépôt: **16.11.2010**

(51) Int Cl.:
**B23Q 5/32** *(2006.01)*       **B23B 47/34** *(2006.01)*

(86) Numéro de dépôt international:
**PCT/IB2010/055191**

(87) Numéro de publication internationale:
**WO 2011/061678 (26.05.2011 Gazette 2011/21)**

(54) **DISPOSITIF D'USINAGE AXIAL**

AXIALE BEARBEITUNGSVORRICHTUNG

AXIAL MACHINING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.11.2009 FR 0958081**

(43) Date de publication de la demande:
**26.09.2012 Bulletin 2012/39**

(73) Titulaire: **Mitis
44340 Bouguenais (FR)**

(72) Inventeur: **PEIGNE, Grégoire
F-44000 Nantes (FR)**

(74) Mandataire: **Nony
3, rue de Penthièvre
75008 Paris (FR)**

(56) Documents cités:
**EP-A1- 1 500 780      DE-A1-102005 002 462
US-A1- 2007 209 813**

**Description**

La présente invention concerne les dispositifs d'usinage axial, tel que perçage, alésage et fraisage, et plus particulièrement ceux de faible encombrement intégrant un mouvement d'avance et de plongée de l'outil, par exemple du foret.

La demande FR 2 881 366 au nom de SETI TEC décrit un dispositif de perçage comportant un pignon d'entraînement pour entraîner en rotation une broche porte foret et un pignon d'avance relié à la broche porte foret par une liaison filetée.

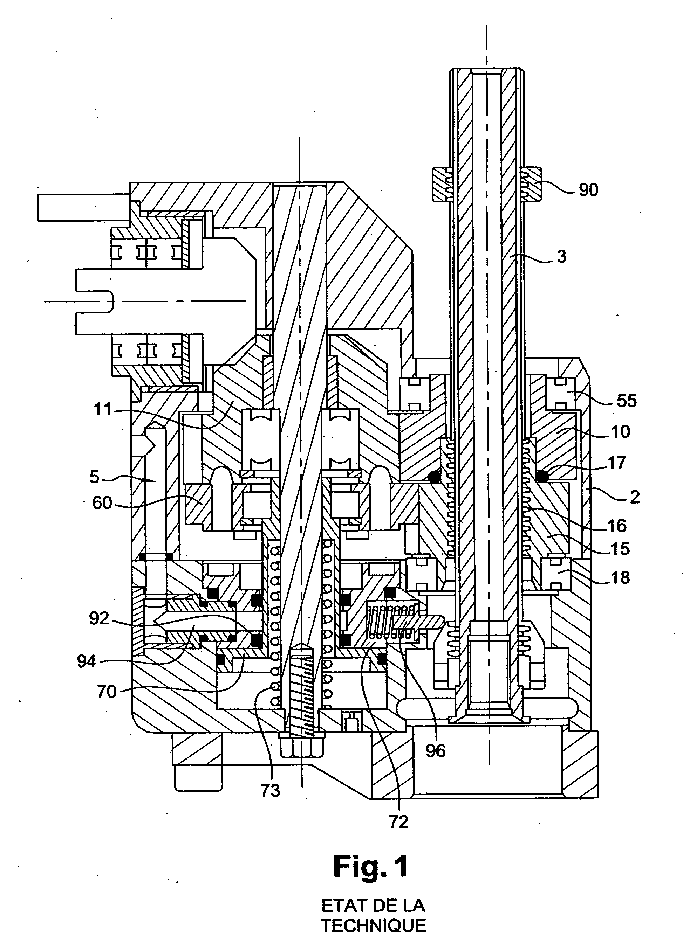

Un dispositif similaire est reproduit à la figure 1. Sur cette figure, les références numériques sont les mêmes que celles utilisées par la suite, pour désigner des pièces constitutives identiques ou similaires.

On connaît par ailleurs des dispositifs de perçage vibratoire par les publications WO 2008/000935 A1, DE 10 2005 002 462 B4, US 7 510 024 B2, FR 2 907 695 et US 2007/209813.

L'assistance vibratoire permet de fragmenter les copeaux et d'augmenter la qualité des perçages en supprimant le risque de bourrage, d'accroître la durée de vie des outils et de fiabiliser le procédé.

Dans les publications FR 2 907 695, US 7 510 024 et US 2007/209813 (cette dernière publication formant la base pour le préambule de la revendication 1), les oscillations sont générées par des cames sans organes de roulement. Il en résulte un frottement au niveau de la came, qui génère un échauffement et du bruit. En outre, la fréquence vibratoire optimale pour la fragmentation correcte du copeau n'est pas toujours obtenue du fait que cette fréquence est un multiple entier du différentiel de la vitesse de rotation du pignon d'avance par rapport à la broche ou par rapport au bâti, directement lié au nombre d'oscillations de la came.

Dans le brevet DE 10 2005/002462, un ressort exerce une force de rappel sur un roulement comportant une surface ondulée, dans une direction d'avance du foret, afin de produire des vibrations axiales. En cas de pression axiale élevée du foret, les organes de roulement peuvent cesser de rouler sur la surface ondulée, et le foret cesse d'osciller. Pour éviter cet inconvénient, le ressort doit présenter une raideur importante, ce qui peut amener à surdimensionner le roulement. Il en résulte un coût et un encombrement plus important.

De plus, le dispositif est rapporté en bout de broche, sous le système d'avance, ce qui ajoute à l'encombrement et amène une complexité accrue.

Il existe un besoin pour perfectionner encore les dispositifs de perçage, notamment ceux destinés à l'usinage de pièces aéronautiques de grandes dimensions, telles que par exemple des parties de fuselage ou d'ailes.

L'invention a ainsi pour objet un dispositif d'usinage axial comportant une broche porte outil, tournant à l'intérieur d'un bâti, ce dernier logeant un système de transmission provoquant l'avance automatique de la broche relativement au bâti sous l'effet de l'entrainement en rotation de la broche porte outil, ce système de transmission comportant un pignon d'avance vissé sur la broche.

Le dispositif comporte un organe de rappel élastique sollicitant le pignon d'avance dans une première direction axiale, de préférence contraire à la direction d'avance (i.e. son mouvement pendant l'usinage) de la broche. Le dispositif comporte un premier roulement comportant des organes de roulement roulant sur une surface de roulement ondulée avec une composante axiale d'ondulation, de façon à solliciter périodiquement en déplacement le pignon d'avance dans une deuxième direction opposée à la première, de telle sorte que la rotation de la broche s'accompagne d'un mouvement vibratoire axial.

Le dispositif selon l'invention présente un encombrement réduit, grâce à l'intégration des moyens de création du mouvement vibratoire à l'intérieur du bâti. Les frottements sont également largement réduits du fait des organes de roulement.

De plus, l'invention peut permettre de générer des vibrations axiales à une fréquence liée à la vitesse de rotation du pignon de rotation, ce qui peut permettre de garder constant le nombre d'oscillations par tour indépendamment des réglages de l'avance. Dans une variante de l'invention, où le premier roulement est en appui direct sur le pignon d'avance et où la fréquence de vibration axiale est alors directement liée à la vitesse de rotation du pignon d'avance et non plus à celle de la broche porte outil, ce dernier avantage est perdu, mais d'autres avantages demeurent.

Il est avantageux que l'organe de rappel sollicite le pignon d'avance dans une direction contraire à la direction d'avance de la broche. Cela permet en effet d'utiliser le premier roulement pour exercer un effort axial dans la direction d'avance de la broche. Ainsi, même en cas de surcharge axiale du foret, celui-ci reste soumis à un mouvement vibratoire. De plus, ni l'organe de rappel ni le premier roulement n'a à être surdimensionné. Le dispositif reste ainsi facilement intégrable à un bâti contenant le système de transmission et d'avance de la broche.

Le premier roulement comporte avantageusement des rouleaux, lesquels peuvent supporter des efforts supérieurs à des billes.

La surface ondulée se comporte avec les organes de roulement comme un train épicycloïdal qui agit comme un réducteur et démultiplie le nombre d'oscillations par tour. Le premier roulement a ainsi la double fonction de réduire les frottements et de réduire par train épicycloïdal le mouvement vibratoire.

La surface ondulée peut être configurée pour produire un nombre non entier, voire non rationnel, de périodes vibratoires par révolution de la broche porte outil. Le nombre de périodes vibratoires par révolution de la broche porte outil est par exemple compris entre 1 et 3, bornes exclues, étant notamment égal à environ 1,5 ou 2,5. La surface de roulement ondulée peut comporter un nombre impair d'ondulations, par exemple sinusoïdales, par révolution. Par exemple, trois ondulations sur la surface ondulée peuvent générer compte tenu de la rotation des roulements, environ 1½ oscillation par tour de broche. Un nombre non entier permet d'éviter une trajectoire parallèle des arêtes de coupe lors du perçage, et accroît l'efficacité de fragmentation des copeaux.

De préférence, la surface ondulée produit un nombre non entier et non rationnel de périodes vibratoires par révolution de la broche porte outil.

Le premier roulement peut comporter une bague plate et une bague ondulée, entre lesquels tournent les organes de roulement, ces bagues pouvant être fixes ou mobiles dans le dispositif. La bague ondulée définit la surface ondulée.

Le nombre d'organes de roulement entre la bague plate et la bague ondulée est égal au nombre d'ondulations de la bague ondulée.

Du fait qu'une des bagues est ondulée, la trajectoire des organes de roulement sur cette bague n'est pas un cercle 2D mais une sinusoïde 3D. Ainsi, la longueur des trajectoires sur une bague plate ou ondulée est différente, même si les diamètres des bagues sont égaux.

La formule de Willis peut être appliquée à l'invention. La trajectoire du point courant sur la bague ondulée peut s'écrire ainsi :

$$\overline{OM} = R1.\overrightarrow{er} + \frac{A}{2}.\sin(N.\theta).\overrightarrow{ez}$$

où R1 est le rayon de la trajectoire sur la bague, $\theta$ l'angle formé par le point courant, N le nombre d'ondulations et A leur amplitude.

En dérivant cette équation, l'équation suivante est obtenue :

$$d\overline{OM} = 0.\overrightarrow{er} + R1.d\theta.\overrightarrow{e\theta} - \frac{A}{2}.N.\cos(N.\theta).d\theta.\overrightarrow{ez}$$

La norme de cette équation permet d'obtenir la dérivée de l'abscisse curviligne, c'est-à-dire la longueur de la trajectoire s1 de la bague ondulée :

$$ds_1 = \sqrt{\left[R1^2 + \left(\frac{A}{2}.N.\cos(N.\theta)\right)^2\right]}d\theta$$

L'intégration de la précédente équation conduit au calcul de l'abscisse curviligne s1 :

$$s_1 = \int_0^{2\pi}\sqrt{\left[R1^2 + \left(\frac{A}{2}.N.\cos(N.\theta)\right)^2\right]}d\theta = \int_0^{2\pi.N}\sqrt{\left[\left(\frac{R1}{N}\right)^2 + \left(\frac{A}{2}.\cos\varphi\right)^2\right]}d\varphi$$

$$s_1 = \sqrt{\left(\frac{R1}{N}\right)^2 + \left(\frac{A}{2}\right)^2} \cdot \int_0^{2\pi.N} \sqrt{1 - \left[\frac{\frac{A}{2}.\sin\varphi}{\sqrt{\left(\frac{R1}{N}\right)^2 + \left(\frac{A}{2}\right)^2}}\right]^2} \, d\varphi$$

$$s_1 = \sqrt{\left(\frac{R1}{N}\right)^2 + \left(\frac{A}{2}\right)^2} \cdot E\left(2\pi.N, \frac{\frac{A}{2}}{\sqrt{\left(\frac{R1}{N}\right)^2 + \left(\frac{A}{2}\right)^2}}\right)$$

l'intégrale précédente étant l'intégrale elliptique incomplète du deuxième type.

Sur la bague plate, la longueur de la trajectoire s2 peut s'écrire comme un simple périmètre de cercle :

$$s_2 = \int_0^{2\pi} R2. d\theta = 2\pi. R2$$

où R2 est le diamètre de la bague.

Les réductions r1 et r2 du train épicycloïdal avec, respectivement, des bagues mobiles ou fixes, peuvent s'écrire :

$$r_1 = \frac{s_1}{s_1 + s_2} \; ; \; r_2 = \frac{s_2}{s_1 + s_2}$$

Ce calcul fait intervenir de nombreux paramètres et par sa nature, induit un nombre d'oscillations par tour non rationnel, comme indiqué dans les exemples ci-dessous.

En prenant des rayons égaux pour les bagues plates et ondulées, soit R1 = R2 = 20 mm, N = 3 pour le nombre d'ondulations, et A = 0,5 mm pour leur amplitude, les réductions du train épicycloïdal sont égales de façon approchée à r1 = 0,500351 et r2 = 0,499649, ce qui donne 1,50105 périodes vibratoires par révolution de la broche dans le cas d'une bague ondulée fixe, et 1,49895 périodes vibratoires par révolution de la broche dans le cas d'une bague plate fixe.

Avec des valeurs de rayon différentes, soit R1 = 22 mm et R2 = 20 mm, et A = 0,1 mm avec le même nombre d'ondulations, les réductions du train épicycloïdal sont égales de façon approchée à r1 = 0,523821 et r2 = 0,476179, ce qui donne 1,57146 périodes vibratoires par révolution de la broche dans le cas d'une bague ondulée fixe, et 1,42854 périodes vibratoires par révolution de la broche dans le cas d'une bague plate fixe.

Un nombre non rationnel d'oscillations par tour de la broche permet d'éviter les risques de vibrations autoentretenues et de broutement.

Il est particulièrement avantageux d'avoir un nombre non entier et non rationnel d'oscillations par tour, notamment en cas d'utilisation du dispositif pour réaliser des opérations de fraisurage et de chambrage. En effet, un nombre non rationnel d'oscillations par tour permet d'éviter un défaut de forme à la fin de l'opération, notamment dans le cas où une temporisation en fin de course de quelques secondes a lieu, pendant laquelle l'avance est nulle. Si l'avance est stoppée en fin de course pour un nombre défini de tours, dans le cas d'un nombre non entier et non rationnel d'oscillations par tour, la surface obtenue, conique ou plane par exemple, n'est soumise à aucune oscillation localisée de façon permanente au même emplacement, et elle présente un défaut de forme acceptable. Le sommet de chaque oscillation est légèrement décalé angulairement par rapport au précédent.

Le système de transmission peut comporter un pignon de rotation servant à l'entraînement en rotation de la broche porte outil, disposé dans le bâti avec une possibilité de déplacement axial relativement au bâti. Le premier roulement peut être en appui direct sur ce pignon de rotation.

Le pignon de rotation peut être situé entre le pignon d'avance et le premier roulement, mais le pignon d'avance peut en variante être situé entre le pignon de rotation et le premier roulement.

Le dispositif peut comporter un deuxième roulement s'interposant entre le pignon d'avance et le pignon de rotation.

Le pignon d'avance peut tourner à l'intérieur d'un troisième roulement, notamment un roulement à aiguilles. Un roulement à aiguilles peut tolérer plus facilement le déplacement axial du pignon d'avance qu'un roulement à billes.

L'organe de rappel élastique peut comporter une rondelle formant ressort, traversée par la broche porte outil. La rondelle formant ressort peut reposer sur une bague radialement intérieure d'un quatrième roulement traversé par la broche porte outil, par exemple un roulement à double rangée de billes, qui peut accroître la précision du guidage.

L'invention a encore pour objet un procédé d'usinage axial dans lequel on utilise un dispositif tel que défini plus haut.

L'invention pourra être mieux comprise à la lecture de la description détaillée qui va suivre, d'exemples non limitatifs de mise en oeuvre de celle-ci, et à l'examen du dessin annexé, sur lequel :

- la figure 1 est une vue en coupe longitudinale d'un exemple de dispositif selon l'art antérieur,
- la figure 2 est une vue similaire à la figure 1 d'un exemple de dispositif de perçage réalisé conformément à l'invention,
- la figure 3 est une vue similaire à la figure 2, d'une variante de réalisation,
- la figure 4 représente en perspective un exemple de surface de roulement ondulée,
- la figure 5 représente le schéma cinématique d'un exemple de dispositif réalisé conformément à l'invention, et
- les figures 6 et 7 sont des schémas cinématiques de variantes de réalisation de dispositifs selon l'invention.

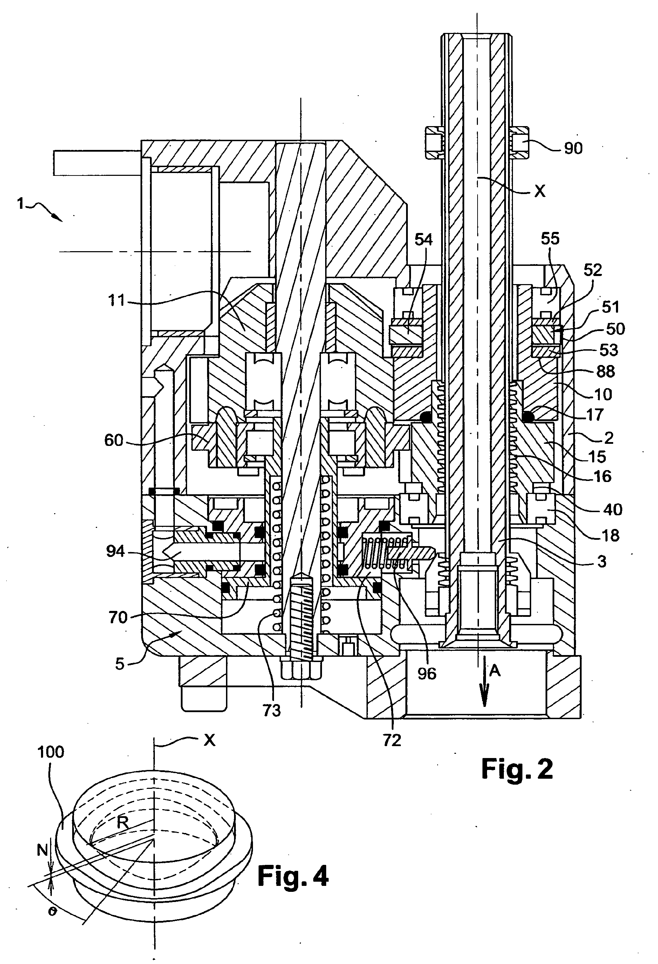

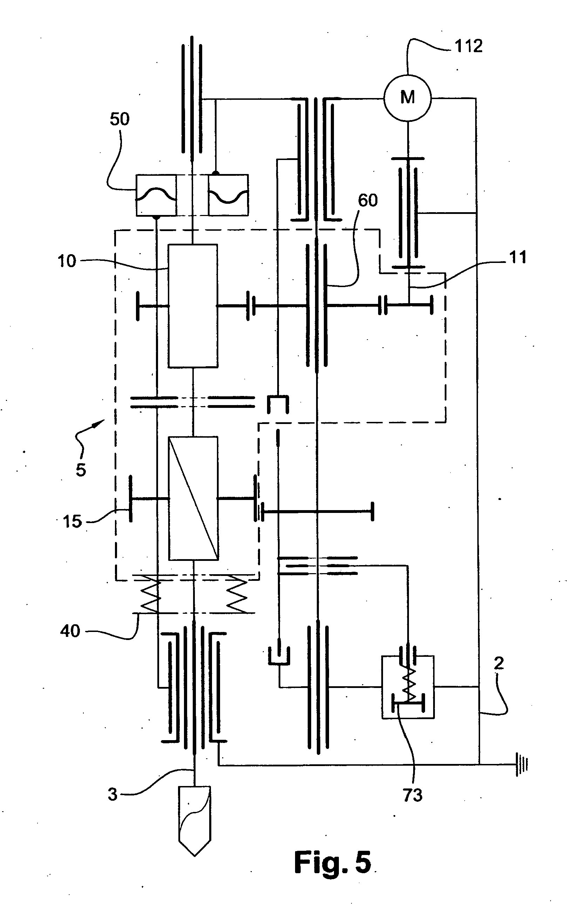

Le dispositif 1 d'usinage, notamment de perçage, conforme à l'invention représenté à la figure 2 comporte un bâti 2, qui loge partiellement une broche porte outil 3 et un système 5 d'entraînement et d'avance automatique de cette broche 3. Ce système 5 est accouplé à un moteur d'entraînement 112 représenté aux figures 5 à 7, qui est par exemple un moteur pneumatique.

La broche 3 entraîne un foret ou une fraise non représenté, de façon à réaliser un usinage axial, par exemple un perçage.

Le système 5 est par exemple similaire à celui décrit dans la demande FR 2 881 366, et comporte un pignon de rotation 10 qui tourne avec la broche 3 tout en autorisant un déplacement axial relativement à celle-ci, la liaison entre le pignon de rotation 10 et la broche 3 étant par exemple une liaison glissière, la broche 3 pouvant comporter des cannelures dans lesquelles s'engagent des nervures correspondantes du pignon de rotation 10.

Le pignon de rotation 10 est entraîné en rotation autour d'un axe X par une roue d'entraînement 11 accouplée au moteur.

Le système 5 comporte également un pignon d'avance 15 qui est mobile axialement à l'intérieur du bâti 2 selon l'axe X et comporte un filetage 16 vissé sur une portion filetée de la broche 3, de telle sorte qu'une rotation du pignon d'avance 15 relativement à la broche 3 provoque un déplacement axial de celle-ci. L'avance est par exemple de 1/10 mm environ par tour de la broche. La vitesse de rotation de la broche va par exemple de 300 à 5000 tours/min.

Le pignon d'avance 15 peut tourner relativement au pignon de rotation 10, un roulement 17 comportant des organes de roulement tels que des billes étant interposé axialement entre les deux, comme illustré.

Le pignon d'avance 15 peut tourner à l'intérieur d'un roulement de guidage inférieur 18 qui assure un guidage en rotation de celui-ci, tout en autorisant une certaine course axiale du pignon d'avance 15, relativement au bâti 2, vers le haut.

Un organe de rappel élastique 40, tel qu'une rondelle formant ressort, est interposé entre le pignon d'avance 15 et le roulement 18. La rondelle 40 formant ressort prend axialement appui sur la bague intérieure du roulement 18.

Le pignon de rotation 10 est mobile à l'intérieur du bâti 2, selon l'axe X, et se trouve sollicité, par l'intermédiaire du pignon d'avance 15 et du roulement 17, en déplacement vers le haut par la rondelle 40 formant ressort.

Un roulement 50 s'interpose axialement entre le bâti 2 et le pignon de rotation 10, du côté opposé au pignon d'avance 15. Ainsi, le pignon de rotation 10 est sollicité en appui contre le roulement 50 par la rondelle formant ressort 40.

Le roulement 50 présente des organes de roulement 51 qui sont dans l'exemple illustré des rouleaux insérés dans une cage 54, qui tournent entre une bague d'appui supérieure lisse 52 reposant contre un roulement 55 de guidage supérieur du pignon dé rotation 10 et une bague inférieure ondulée 53 définissant une surface de roulement ondulée, reposant sur un épaulement 88 du pignon de rotation 10. Un exemple de surface de roulement ondulée 100 avec une composante axiale est représenté à la figure 4. Sur cette figure sont représentés le rayon R1 de la bague et l'angle θ, utilisés dans le calcul du nombre de périodes vibratoires par révolution de la broche, détaillé précédemment.

L'axe de rotation de chaque roulement 51 peut être perpendiculaire à l'axe X, comme illustré.

Le roulement supérieur 55 est par exemple un roulement à billes, mais pourrait être autre.

La surface de roulement ondulée provoque un déplacement axial des rouleaux 51 lors de leur rotation. L'amplitude extrême de ce déplacement est par exemple comprise entre 2 et 4/10 mm. Un tel mouvement axial est transmis, par l'intermédiaire du pignon de rotation 10, au pignon d'avance 15 et ainsi à la broche 3 porte outil.

La surface de roulement ondulée comporte, de préférence, un nombre impair d'ondulations par révolution, de manière à obtenir une fréquence vibratoire qui est un multiple non entier, notamment non rationnel, de la fréquence de rotation.

Le système 5 comporte une roue 60 d'entraînement du pignon d'avance 15, qui est accouplée par crabotage avec la roue 11 et qui peut être désaccouplée automatiquement de la roue d'entraînement 11, en fin de course vers le bas de la broche 3, de façon à permettre une remontée de celle-ci.

La roue 60 entraîne le pignon d'avance 15 à une vitesse de rotation légèrement différente de celle du pignon de rotation 10, de façon à générer le mouvement d'avance recherché dans la direction d'avance A, pour la broche 3, de façon comme en soi.

Au terme du mouvement d'avance de la broche 3, une butée 90 portée par la broche 3 vient en appui contre la tranche d'extrémité du pignon de rotation 10 et amène la roue d'entraînement 60 à s'éloigner de la roue d'entraînement 11.

La roue d'entraînement 60 entraîne vers le bas un piston 70 qui porte un joint d'étanchéité 92. Ce dernier isole, lorsque la roue d'entraînement 60 est accouplée à la roue d'entraînement 11, la chambre 72 située au-dessus du piston d'une arrivée d'air comprimé 94. Lorsque le piston 70 est déplacé vers le bas, le joint 92 cesse de s'appliquer de façon étanche et la pression régnant au-dessus de la chambre 72 entraîne le piston 70 vers le bas. Les roues d'entraînement 11 et 60 sont alors complètement désaccouplées et la broche peut opérer un mouvement de remontée. Un clapet 96 est actionné par la broche 3 au terme de sa remontée, ce qui ramène à la pression atmosphérique la chambre 72 et permet la remontée du piston 70 sous l'effet d'un ressort de rappel 73. Les roues d'entraînement 11 et 60 peuvent à nouveau s'accoupler.

Le système de transmission peut être similaire à celui décrit dans la demande FR 2 881 366.

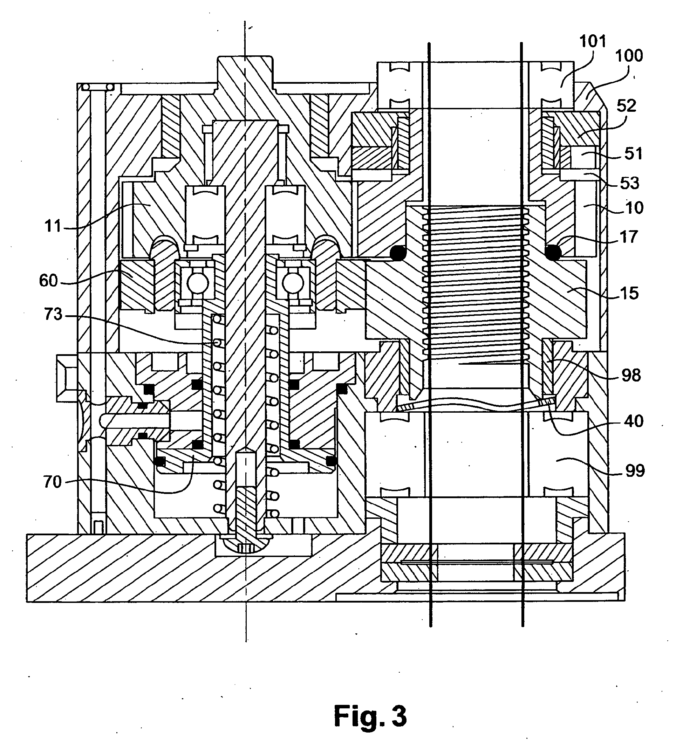

La variante de réalisation illustrée à la figure 3 diffère de celle de la figure 2 notamment par le remplacement du roulement inférieur 18 par un roulement à aiguilles 98, qui admet plus facilement un mouvement axial entre les surfaces de roulement. La broche 3 est guidée inférieurement par un roulement 99 à double rangée de billes.

Un roulement à aiguilles 100 est également utilisé en remplacement du roulement supérieur à 55, pour guider en rotation le pignon de rotation 10.

La broche 3 est guidée supérieurement en rotation par un roulement à billes 101. La rondelle 40 formant ressort repose sur la bague intérieure du roulement 99 à double rangée de billes.

La figure 5 représente le schéma cinématique d'un exemple de dispositif réalisé selon l'invention.

Ce schéma représente les liaisons entre les principaux éléments du dispositif 1 décrits précédemment. Le moteur 112 auquel le système de transmission 5 est accouplé par la roue d'entraînement 11 est également représenté.

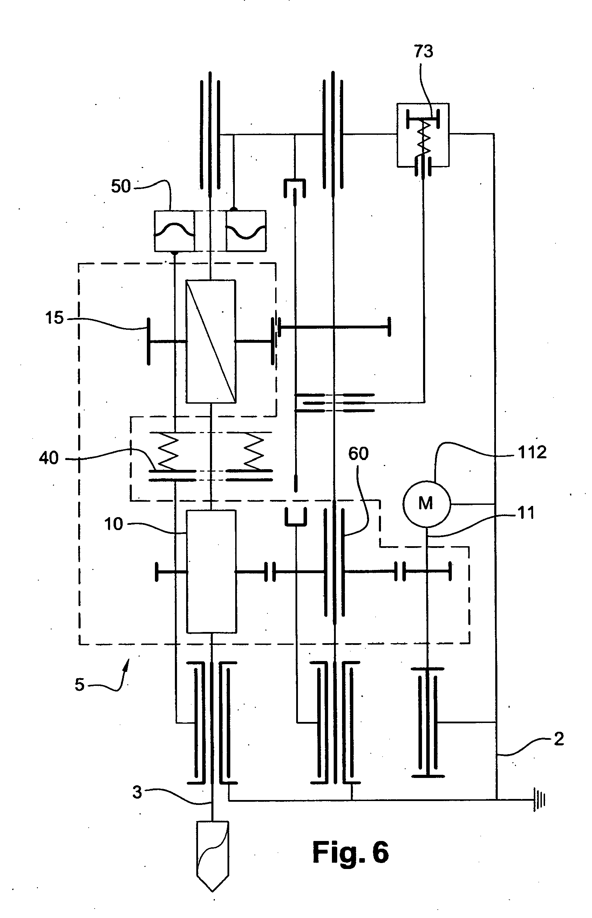

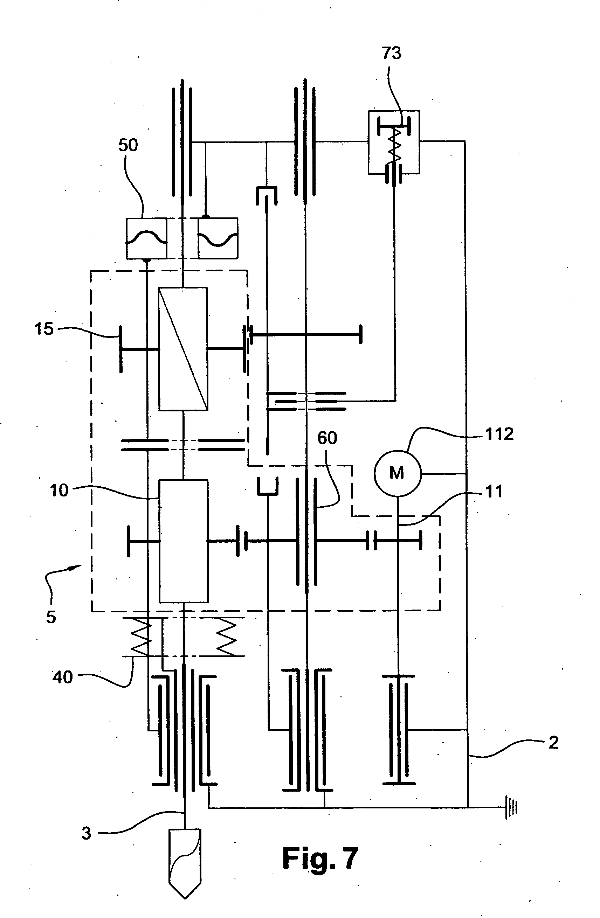

Dans les variantes des figures 6 et 7, le système 5 est intégré à une configuration où les pignons d'avance et de transmission sont inversés. L'emplacement du moyen de rappel 40 diffère entre les réalisations des figures 6 et 7.

Bien entendu, l'invention n'est pas limitée aux exemples illustrés. On peut notamment réaliser autrement le système de transmission et d'avance 5.

L'expression "comportant un" doit se comprendre comme étant synonyme de "comportant au moins un".

### Revendications

1. Dispositif d'usinage axial (1), comportant une broche porte outil (3) tournant à l'intérieur d'un bâti (2), ce dernier logeant un système de transmission (5) provoquant l'avance automatique de la broche relativement au bâti (2) sous l'effet de l'entrainement en rotation de la broche porte outil, ce système de transmission (5) comportant un pignon d'avance (15) vissé sur la broche (3), le dispositif comportant un organe de rappel élastique (40) sollicitant le pignon d'avance (15) dans une première direction axiale, contraire à la direction d'avance (A) de la broche (3), dispositif **caractérisé par le fait qu'**il comporte un premier roulement (50) comportant des organes de roulement (51) roulant sur une surface de roulement ondulée avec une composante axiale, de façon à solliciter périodiquement en déplacement le pignon d'avance (15) dans une deuxième direction opposée à la première, de telle sorte que la rotation de la broche (3) s'accompagne d'un mouvement vibratoire axial.

2. Dispositif selon la revendication 1, le premier roulement (50) comportant des rouleaux (51).

3. Dispositif selon l'une des revendications 1 et 2, la surface ondulée produisant un nombre non entier de périodes vibratoires par révolution de la broche (3) porte outil.

**4.** Dispositif selon la revendication 3, la surface ondulée produisant un nombre non rationnel de périodes vibratoires par révolution de la broche porte outil (3).

**5.** Dispositif selon l'une quelconque des revendications précédentes, le système de transmission (5) comportant un pignon de rotation (10) servant à l'entraînement en rotation de la broche (3) porte outil, disposé dans le bâti (2) avec une possibilité de déplacement axial relativement à celui-ci.

**6.** Dispositif selon la revendication précédente, le pignon de rotation (10) étant situé entre le pignon d'avance (15) et le premier roulement (50).

**7.** Dispositif selon la revendication 5 ou 6, comportant un deuxième roulement (17) s'interposant entre le pignon d'avance (15) et le pignon de rotation (10).

**8.** Dispositif selon l'une quelconque des revendications précédentes, le pignon d'avance (15) tournant à l'intérieur d'un troisième roulement, notamment un roulement à aiguilles (98).

**9.** Dispositif selon l'une quelconque des revendications précédentes, l'organe de rappel élastique (40) comportant une rondelle formant ressort, traversée par la broche (3) porte outil.

**10.** Dispositif selon la revendication précédente, la rondelle formant ressort reposant sur une bague radialement intérieure d'un quatrième roulement traversé par la broche (3) porte outil, notamment un roulement (99) à double rangée de billes.

**11.** Dispositif selon l'une quelconque des revendications précédentes, la surface de roulement ondulée comportant un nombre impair d'ondulations.

**12.** Procédé pour réaliser un usinage axial dans une pièce, dans lequel on utilise un dispositif (1) tel que défini dans l'une quelconque des revendications précédentes.

**13.** Procédé selon la revendication 12, appliqué à des opérations de fraisurage ou de chambrage.

**Patentansprüche**

**1.** Axialvorrichtung (1) mit einer Werkzeughalterspindel (3), die sich im Inneren eines Gestells (2) dreht, das ein Transmissionssystem (5) enthält, das einen automatischen Antrieb der Spindel relativ zu dem Gestell (2) durch einen Rotationsantriebseffekt der Werkzeughalterspindel erzeugt, wobei das Transmissionssystem (5) ein an der Spindel (3) angeschraubtes Antriebsrad (15) aufweist, wobei die Vorrichtung ein elastisches Rückstellorgan (40) aufweist, das das Antriebsrad (15) in einer ersten Axialrichtung entgegengesetzt zu der Antriebsrichtung (A) der Spindel (3) betreibt, wobei die Vorrichtung **dadurch gekennzeichnet ist, dass** sie ein erstes Wälzlager (50) aufweist, dessen Lagerelemente (51) auf einer gewellten Lagerfläche mit einer Axialkomponente wälzen, so dass sie das Antriebsrad (15) periodisch zu einer Versetzung in einer zu der ersten entgegengesetzten zweiten Richtung drängen, so dass die Drehung der Spindel (3) von einer axialen Vibrationsbewegung begleitet wird.

**2.** Vorrichtung nach Anspruch 1, wobei das erste Wälzlager (50) Walzen (51) aufweist.

**3.** Vorrichtung nach einem der Ansprüche 1 und 2, wobei die gewellte Oberfläche eine nicht-ganze Zahl von Vibrationsperioden pro Umlauf der Werkzeughalterspindel (3) erzeugt.

**4.** Vorrichtung nach Anspruch 3, wobei die gewellte Oberfläche eine nicht-rationale Zahl von Vibrationsperioden pro Umlauf der Werkzeughalterspindel (3) erzeugt.

**5.** Vorrichtung nach einem der vorstehenden Ansprüche, wobei das Transmissionssystem (5) ein Rotationsgetrieberad (10) aufweist, das zum Rotationsvortrieb der Werkzeughalterspindel (3) dient und in dem Gestell (2) mit einer axialen Verstellmöglichkeit relativ zu diesem angeordnet ist.

**6.** Vorrichtung nach dem vorstehenden Anspruch, wobei das Rotationsgetrieberad (10) zwischen dem Antriebsrad (15) und dem ersten Wälzlager (50) angeordnet ist.

7. Vorrichtung nach Anspruch 5 oder 6, mit einem zweiten Wälzlager (17), das zwischen dem Antriebsrad (15) und dem Rotationsgetrieberad (10) angeordnet ist.

8. Vorrichtung nach einem der vorstehenden Ansprüche, wobei das Antriebsrad (15) sich im Innern eines dritten Wälzlagers, insbesondere eines Nadellagers (98), dreht.

9. Vorrichtung nach einem der vorstehenden Ansprüche, wobei das elastische Rückstellorgan (40) einen Federring aufweist, durch den die Werkzeughalterspindel (3) durchführt.

10. Vorrichtung nach dem vorstehenden Anspruch, wobei der Federring auf einem inneren Radialring eines vierten Wälzlagers ruht, durch das die Werkzeughalterspindel (3) durchführt, insbesondere einem doppelreihigen Kugellager (99).

11. Vorrichtung nach einem der vorstehenden Ansprüche, wobei die wellige Lageroberfläche eine ungerade Anzahl von Wellen aufweist.

12. Verfahren zur Verwirklichung einer axialen Verwendung an einem Stück, in dem eine Vorrichtung (1) gemäß einem der vorstehenden Ansprüche gebraucht wird.

13. Verfahren nach Anspruch 12, das zum Ausfräsen oder Ansenken eingesetzt wird.


**Claims**

1. An axial machining device (1), comprising a tool-carrier spindle (3) rotatable in a housing (2), the housing housing a transmission system (5) causing the spindle to advance automatically relative to the housing (2) under the effect of the tool-carrier spindle being driven in rotation, this transmission system (5) including an advance gearwheel (15) screwed onto the spindle (3), the device including a resilient return member (40) urging the advance gearwheel (15) in a first axial direction, opposite to the advance direction (A) of the spindle (3), device **characterized by** the fact that it includes a first rolling bearing (50) having rolling members (51) rolling on an undulating raceway having an axial component, thereby periodically urging the advance gearwheel (15) to move in a second direction opposite to the first, such that the rotation of the spindle (3) is accompanied by an axial vibratory motion.

2. A device according to claim 1, the first rolling bearing (50) having rollers (51).

3. A device according to claim 1 or 2, the undulating raceway producing a non-integer number of vibratory periods per revolution of the tool-carrier spindle (3).

4. A device according to claim 3, the undulating raceway producing an irrational number of vibratory periods per revolution of the tool-carrier spindle (3).

5. A device according any one of the preceding claims, the transmission system (5) including a rotary gearwheel (10) serving to drive the tool-carrier spindle (3) in rotation, arranged in the housing (2) with the possibility of moving axially relative thereto.

6. A device according to the preceding claim, the rotary gearwheel (10) being situated between the advance gearwheel (15) and the first rolling bearing (50).

7. A device according to claim 5 or 6, including a second rolling bearing (17) interposed between the advance gearwheel (15) and the rotary gearwheel (10).

8. A device according to any one of the preceding claims, the advance gearwheel (15) rotating within a third rolling bearing, in particular a needle bearing (98).

9. A device according to any one of the preceding claims, the resilient return member (40) comprising a spring washer having the tool-carrier spindle (3) passing therethrough.

10. A device according to the preceding claim, the spring washer resting against a radially inner ring of a fourth rolling bearing through which the tool-carrier spindle (3) passes, in particular a bearing (99) having two rows of balls.

11. A device according to any one of the preceding claims, the undulating raceway having an odd number of undulations

12. A method of performing axial machining in a workpiece, wherein use is made of a device (1) as defined in any one of the preceding claims.

13. A method according to claim 12, applied to countersinking or counterboring operations.

**Fig. 1**

ETAT DE LA
TECHNIQUE

Fig. 2

Fig. 4

**Fig. 3**

**Fig. 5**

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2881366
- WO 2008000935 A1
- DE 102005002462 B4
- US 7510024 B2
- FR 2907695
- US 2007209813 A
- US 7510024 B
- DE 102005002462